# EUROPEAN PATENT APPLICATION

(11) **EP 4 386 521 A1**
(43) Date of publication of application: **19.06.2024**
(21) Application number: 22214087.3
(22) Date of filing: 16.12.2022
(51) Int. Cl.: G06F 3/01, G06F 3/16

(54) **USER INTERFACE CONTROL**

(71) Applicant: Koninklijke Philips N.V., 5656 AG Eindhoven (NL)
(72) Inventor: LAUTE, Niels, Eindhoven (NL); TALGORN, Elise Claude Valentine, Eindhoven (NL); VERSCHOOR, Volker B., 5656AG Eindhoven (NL)
(74) Representative: Philips Intellectual Property & Standards

(57) **Abstract**

Proposed concepts aim to provide schemes, solutions, concepts, designs, methods and systems pertaining to acquiring user inputs for control of an interface. Information describing a context of the user is leveraged in order to determine whether the user is able to provide a primary type of input. If they can, then an input from the user of the primary type is detected. If not, an input from the user of a secondary type is detected. Thus, control inputs for an interface by a user may be more appropriately detected based on surrounding of the user and/or a status of the user. In this way, an easier and more robust means for controlling an interface may be provided.

## Description

### FIELD OF THE INVENTION

The present invention relates to the field of user interfaces, and more particularly to the field of acquiring user interface control inputs.

### BACKGROUND OF THE INVENTION

An important consideration in the design of interfaces is the convenience of the interaction with, and control of, the interface. Some interfaces are interacted with in high-stress, high-pressure environments, in which it is key for interfaces to be intuitive so as to not get in the way of split-second decisions. In particular, to facilitate effective clinical decision making in a healthcare context, the interaction must not consume more cognitive effort than absolutely necessary.

Typically, users interact with interfaces using hand gestures, voice control, gaze direction, etc. Such ways of interacting with interfaces are intuitive and convenient for the user. However, in certain contexts/scenarios some modes of interaction may not be appropriate. For example, the use of touch screens may be ruled out in a sterile environment (i.e. an operating theatre or intensive care unit), while voice interaction is inconvenient and often ineffective in a noisy environment.

Thus, in certain scenarios/contexts there is a need for concepts for improving control of interfaces by users.

### SUMMARY OF THE INVENTION

The invention is defined by the claims.

According to examples in accordance with an aspect of the invention, there is provided a method for acquiring an input from a user to control an interface, the method comprising:
obtaining contextual data describing a context of the user;
processing the contextual data to determine whether the user is able to provide a primary type of input;
responsive to determining that the user is able to provide the primary type of input, detecting an input of the primary type performed by the user; and
responsive to determining that the user is not able to provide the primary type of input, detecting an input of a different secondary type performed by the user.

Proposed concepts aim to provide schemes, solutions, concepts, designs, methods and systems pertaining to the acquisition of user inputs for control of an interface. Contextual data of the user is leveraged to determine whether the user is able to provide a primary type of input. If they can, then an input from the user of the primary type is detected. If not, an input from the user of a secondary type is detected. Thus, control inputs for an interface by a user may be more appropriately detected based on surrounding of the user or a status of the user. In this way, a more intuitive and less intrusive means for controlling an interface may be provided.

The invention provides for switching between a first interface control input (i.e., hand gestures, voice commands, etc.) to a secondary interface control input (i.e., foot gesturing) responsive to determining that the user cannot currently perform the first types of input interface control input. For example, the user may be handling another device/item, and therefore cannot provide a primary type of input (i.e. a hand gesture). As another example, the user may be in a noisy environment, in which case it may be determined that the user cannot provide a voice command as a primary type of input. In this case, the invention determines this from contextual information of the user, and switches to detecting a secondary type of input that the user can provide.

While primary input types may be typically convenient and intuitive for the user, this may not always be the case. The invention is based on this realization, in that having a secondary input type is beneficial in scenarios/contexts where the user cannot provide the primary input type. Thus, while the secondary input type may not be as effective and/or intuitive as the primary input type, there are contexts in which providing an input of the secondary type is preferable to the user.

Thus, the invention may provide means for acquiring input to an interface that is more flexible for a variety of different contexts that the user may be in. Users may particularly benefit when controlling interfaces in high-stress situations in which adaptation of control of the interface is needed.

In some embodiment, the contextual data may comprise information describing a property of the user or the environment surrounding the user.

Two categories of information that may dictate whether a user is capable of providing input in a certain way include the property (i.e., a status, condition, characteristic of the user), and the surrounding environment (i.e., noise, temperature, placement of items, other people). These factors dictate whether/to what extent a user can perform actions that result in inputs for control of the interface. Thus, a more affective determination as to whether to detect the first or second type of input may be obtained by generating the contextual data including this information.

More specifically, contextual data may comprise information describing at least one of a position of the user, a condition of the user, a task being performed by the user, a gaze direction of the user, an ambient noise surrounding the user, a location of the user, and other persons near the user.

The forgoing pieces of information may be particularly useful for accurate determination of whether/the extent to which, a user can provide an input of the primary types (and/or secondary type).

In some embodiments, obtaining the contextual data may be performed responsive to the user providing at least one of the primary type of input and the secondary type of input.

By gathering the information when responsive to the user performing an action related to an input of the primary or secondary type, the contextual data may be up to date.

The primary input type may comprise at least one of a hand gesture, an eye gaze direction, a voice command, and a controller interaction.

These types of inputs are typical/traditional modes of interacting with interfaces that are likely familiar to the user and therefore provide an intuitive way of controlling the interface. Indeed, if the user is in a context in which they can provide an input of one of the above types, it is likely that this will be a preferred mode of control (i.e. due to ease, and the level of complexity of input that the user is capable of providing).

In some embodiments, the secondary input type comprises at least one of a foot gesture, a leg gesture, an arm gesture, and a head gesture.

If the user is in a context where they cannot perform an input of a primary type, they may be able to do so using a major limb. This is often the case because tasks/circumstances that restrict the user's ability to interact with an interface/provide an input often require use of the user's hands/fingers, voice and/or gaze. Major limbs are typically not used in/restricted by tasks that restrict users from interacting with an interface in a traditional manner (i.e. hand gestures, voice control, etc.). Thus, these types of input/input modalities may be likely to provide a convenient fallback for the user wishing to provide an input to the interface.

In some embodiments, the secondary input type may be user selectable.

It is highly likely that the user will be aware of a secondary (i.e. fallback) input type that will be convenient for them in the future (i.e. they may anticipate what types of input that will be difficult/impossible for them to perform). Thus, by enabling this input type to be user selectable, ease of interaction with the interface for the user is improved.

More specifically, the method may further comprise receiving an indication of a body part of the user; and determining the secondary input type based on the indication from the user.

One way in which the selection of the secondary input type is to utilize a similar system that detects the user inputs to retrieve an indication as to a body part (i.e. foot, arm, leg, head, etc.) that the user wishes to be user selectable. This may be intuitive, and therefore inherently easy for the user to perform.

In some embodiments, obtaining the contextual data may comprise obtaining one or more images including at least part of the user from one or more cameras of the user monitoring system, and analyzing the one or more images to extract the contextual data.

A useful means for determine a context of the user is via an image (or a stream of images) of the user, and therefore their surroundings. This can provide many of the information listed above that may be particularly useful for determining if a user is capable of providing a certain input type. Known image processing techniques can be employed for the accurate assessment of such images for fast and accurate production of contextual information of the user.

In further embodiments, responsive to determining that the user is not able to provide the primary type of input, the method may further comprise communicating a notification to the user prompting a switch of input type, and receiving a confirmation from the user.

By retrieving a user confirmation before proceeding to detecting inputs of the secondary type (and thus potentially controlling the interface), accidental control of the interface may be avoided. Automatic switching without confirmation may lead to misuse of the interface, frustration of the user, and potential safety and security risks if it occurs in the wrong scenario. Thus, it is desirable to avoid a situation in which the type of input used to control the interface is controlled without the user's knowledge and consent

In some embodiments, detecting the input of the primary type or the input of the secondary type may comprise obtaining a signal containing the input of the primary type or the secondary type, and analyzing the signal to extract the input of the primary type or the secondary type. The signal may comprise at least one of an image signal, a sound signal, a pressure signal, or a motion sensor signal.

Images, sounds, pressures and motions all provide information useful for determining an action performed by a user that may be considered an input of the primary or secondary types. Thus, obtaining at least one signal comprising information of the above enables the accurate detection of the input of the user.

The method may further comprise determining whether the user is able to provide a plurality of primary types of input by processing the contextual data, and wherein detecting the input of the secondary type is performed responsive to determining that the user is not able to provide each of the plurality of primary types of input.

There may be a number of different types of primary (i.e. initial) types of inputs that can be used to control the interface. For example, an interface may be interactable using both a controller and voice control, such as an interface for a TV. Therefore, it may be preferable to only switch to detection of an input of the secondary type when all primary types of input are unavailable to the user.

In some embodiments, the interface may be augmented reality based, or virtual reality based.

According to additional examples in accordance with an aspect of the invention, there is provided a computer program comprising computer program code means adapted, when said computer program is run on a computer, to implement a method for acquiring an input from a user to control an interface according to an embodiment.

According to further examples in accordance with an aspect of the invention, there is provided a system for acquiring an input from a user to control an interface, the system comprising:
a user tracking arrangement configured to monitor the user to generate contextual data describing a context of the user;
a processor configured to process the contextual data to determine whether the user is able to provide a primary type of input, and
wherein the user tracking arrangement is further configured to:
   detect an input of the primary type performed by the user responsive to determining that the user is able to provide the primary type of input; and
   detecting an input of the secondary type performed by the user responsive to determining that the user is not able to provide the primary type of input, wherein the secondary input type is different from the primary input type.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 presents a flow diagram of a method for acquiring an input from a user to control an interface according to an embodiment of the invention;
Fig. 2 presents a flow diagram of a method for determining a secondary input type according to an aspect utilized by some embodiments of the invention; and
Fig. 3 presents a simplified block diagram of a system for acquiring an input from a user to control an interface according to another embodiment; and
Fig. 4 is a simplified block diagram of a computer within which one or more parts of an embodiment may be employed.

### DETAILED DESCRIPTION OF THE EMBODIMENTS

The invention will be described with reference to the Figs.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

It should be understood that the Figs are merely schematic and are not drawn to scale. It should also be understood that the same reference numerals are used throughout the Figs to indicate the same or similar parts.

The invention proposes concepts for acquisition of an input from a user for the control of an interface. In particular, the invention provides for the determination as to whether the user is able to provide a primary type of input. If the user can't, then an input of a secondary type is detected instead of the primary type. In this way, when the user is in a certain scenario/context in which they can't (or it is highly inconvenient to) provide an input of the primary type, they may be able to control the interface in a simple manner.

This may be particularly beneficial for high-stress and high-pressure scenarios in which the user may not always be able to provide an input of a primary type. For example, when the user is a caregiver treating a patient, it may be inappropriate or impossible to use hand gestures (due to sterility concerns or handling of a device) or voice commands (due to a large number of person-to-person interactions surrounding them). Further, a pilot may not be able to take their hand off controls in certain scenarios, and therefore hand gestures may not be appropriate (or their control over the aircraft may be sacrificed).

Accordingly, the proposed invention provides a means for providing an input to an interface that is more robust in a variety of different contexts. While the primary input type may be preferable due to intuitiveness and effectiveness of interaction with an interface, the secondary input type may be used in scenarios which effectively reduce the ease and effectiveness of use of the primary input type.

By way of specific example, a challenge in the healthcare domain is the design of interfaces that are easy to use in contexts where the user (e.g., a caregiver) is often under a lot of stress. Interfaces should be intuitive and should not get in the way when users are required to make split-second decisions that could impact the outcome of the treatment, and thus patient well-being. An additional complexity is that, in some contexts (e.g., the operating theatre or intensive care unit), maintaining sterility is vital. Thus, some traditional modalities for controlling/interacting with interfaces may not be ideal (or even possible) to use.

Augmented/virtual reality interfaces addresses some issues in the healthcare domain, in that it provides ways to visualize information that can be interacted with in a variety of different ways. Common interface input types include gestures/hand-tracking, voice commands, gaze tracking and/or remote controls.

However, even these modes of input to the interfaces might not suffice. This is particularly the case, for example, in a minimally invasive surgery space. Voice control can be cumbersome to use and distracting (i.e. in an operating theatre where many people are interacting with each other). Gesture/hand-tracking may not work in scenarios where users are controlling other devices - a so-called "hands-busy" scenario (i.e. when using a catheter, scalpel, etc.). Gaze interaction is not ideal for control of complex menu structures, resulting in unintended user actions and/or eye strain. Indeed, users may be looking at other objects/systems other than the interface, and so looking away to interact with an interface may be a distraction (i.e. might be cross-referencing between a patient and clinical pictures).

Hence in acute working conditions, where users are already using their hands, gaze and voice to perform a task, there is a need for an additional control interface in case the hands, gaze and voice standard controls are not available.

Thus, it is proposed to monitor a user of the interface to gather contextual information that can be used to determine an input mode to be detected and use to control the interface. Such contextual data may include information describing a property of the user (e.g., a position of the user, a condition of the user), or the environment surrounding the user (e.g., a surrounding noise, a number of people, a proximity of input controls).

In a specific embodiment, the invention may provide that users foot motion (i.e. a secondary input modality) is detected to control an interface when primary input modalities are not available to the user. For example, if the user's surroundings are too noisy for voice control, the user is operating another device with their hands and/or the user is gazing at a medical certain image, the control input will automatically switch to the foot of the user. Put another way, the foot (or another limb) of the user might be tracked because the original controls of the interface are not available (fall back scenario where the user is not near a physical button).

Of course, the advantages associated with the invention are not just restricted to the context of healthcare. For example, the invention may have advantages in any situation in which users are not capable/able to provide an input using a primary input modality (e.g., not able to use their hands for a mouse/keyboard/touchscreen). This includes, but is not restricted to the fields of aviation, mobility and accessibility.

In certain embodiments, the user may be able to select their own secondary input type/modality. For example, the user may tag a certain body part as a secondary/fall back interactor during user interactions with an interface.

Specifically, during interaction with the interface the user is tracked to determine an input using a primary input type(s), such as what the user is doing with their gaze, hands, and/or voice. This information is used to evaluate whether the user is using some of these interactors to interact with something else than the interface (i.e. talking to another person, looking at another object, or handling a device). If it is determined from the context of the user that the primary input types are unavailable, an input of a secondary type(s) is detected. In this case, this may be a tagged body part (such as a foot, arm, etc.).

Advantageously, embodiments may provide a notification to the user that the secondary input type is activated as an interactor/input. The user may need to confirm using one of the primary input types in a simple manner (e.g., a small hand twitch, a gaze movement briefly to a certain position, a brief audible sound). This may be important for avoiding unintentional interactions with the interface which may cause frustration and give rise to safety concern. For example, the user may need to look at a specific part of a screen (e.g. gaze direction as primary input type) when executing (or before executing) the foot action (e.g. foot movement as secondary input type).

The main aspects of embodiments of the invention include:
(i) A system to track the user/users. This may be camera based, and thus capable of skeleton (and posture) tracking of multiple users in a physical space. Different users may be authenticated to detect who is using the primary user of the interface (e.g. wearing an AR headset). As a result, data that can be useful for understanding a context of the user can be provided.
(ii) A system to detect an input(s) of a primary type(s). For example, the system may be capable of tracking the user's hands and the user's eye gaze, and uses these as input for (initially) controlling the interface.
(iii) A system to detect an input(s) of a secondary type(s). For example, the system may be capable of tracking foot movement, arm movement and/or leg movement. This may be in the form of a camera system or pressure sensors.
(iv) A memory that records the user's tagged secondary input type(s).
(v) A processor to analyze data from the tracking system and optionally additional information to determine when to switch between the primary and secondary input types.

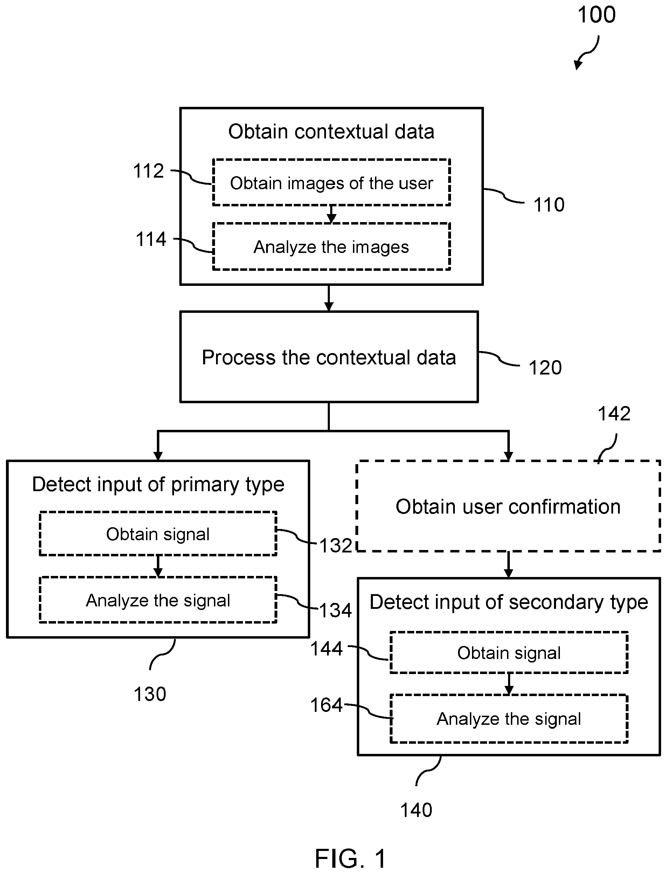

Moving on, Fig. 1 presents a flow diagram of a method for acquiring an input from a user to control an interface according to an embodiment of the invention. The interface may be augmented reality (AR), or virtual reality (VR) based. Alternatively, the interface may be any interface for a device that the user may be controlling/reading from.

At step 110, contextual data describing a context of the user is obtained. The context of the user may be the surroundings of the user, a condition of the user, a status of the user, or any other information describing the circumstances of the user as they provide an input to the interface. Indeed, anything about the user and/or their surroundings in the time preceding the provision of the input to the interface, or during the provision of input to the interface may be considered to be part of the context of the user.

As a result, the contextual data may comprise information describing a property of the user or the environment surrounding the user. More specifically, the contextual data may comprise information describing at least one of a position of the user, a condition of the user, a task being performed by the user, a gaze direction of the user, an ambient noise surrounding the user, a location of the user, and other persons near the user. However, the contextual data may not be restricted to this, and may include any information that may be useful determining the capability and/or desirability for the user to provide an input of a certain type. These factors would be readily understood and appreciated by the skilled person.

In some embodiments, step 110 may comprise (optional) sub-steps 112 and 114. At step 112, one or more images of the user are obtained from one or more cameras of a user monitoring system. These images may be obtained from storage, or may be captured directly via an imaging device. Such images may include at least part of the user, such that contextual data may be extracted from the image.

Indeed, at step 114, the one or more images are analyzed to extract the contextual data. This may be achieved using known image processing methods that are able to extract data describing an image from the image itself. Such processing methods would be readily known and appreciated by the skilled person.

Step 110 may be performed responsive to the user providing at least one of the primary type of input and the secondary type of input. In other words, the contextual data may be obtained when the user provides an input to the interface, whether that be by performing an action of a first type (i.e. a hand gesture) or a second type (e.g. a foot movement). Thus, a context relevant to the user input is obtained.

Moving onto step 120, the contextual data is then processed to determine whether the user is able to provide a primary type of input. Essentially, this means that the circumstances of/surrounding the user are taken into account to ascertain whether the user can, or whether it is appropriate for the user to, provide an input of a first type.

By way of simplified example, the contextual data may indicate that the user is in a "hands-busy" scenario (e.g. a capture and analyzed image subsequent to/during user input shows that the user is using their hands to use a task). If the primary type of input is a hand gesture type, it may be determined in step 120 that the user could not provide the input of the primary type without significantly disrupting the user. In other words, the user is not able to provide the primary type of input.

As another example, the contextual data may indicate that the user is in a noisy environment (e.g. an image may show the user surrounded by other people, or a speaker may pick up excess background noise). In this case, if the primary type of input is a voice command type, it may be determined that the user cannot provide the input of the primary type of input without disturbing those around them, or that such an input type may not be detected by the corresponding input peripheral/microphone.

Of course, there are many other scenarios in which the contextual data will indicate whether the user is (not) able to perform an action to provide an input of the primary type. These circumstances would be readily appreciated by the skilled person. Thus, an exhaustive list of combinations of primary input types and contextual data, and whether the user would be able to provide an input of the primary type given the contextual data is omitted here for sake of brevity.

Responsive to determining that the user is able to provide the initial type of input, the method proceeds to step 130. Alternatively, responsive to determining that the user is not able to provide the initial type of input, the method proceeds to step 140.

At step 130, an input of the primary type performed by the user is detected. To link to the above, when it is determined that the user is able to perform an action of the primary type, and therefore perform a primary type of input, the input of the primary type is detected. This input can then be used to control the interface (i.e. control it to present certain information, switch mode, etc.).

The detection may be performed by any known method of detecting the input of the primary type, which will depend what type of primary input is selected. For example, if the primary type of input is an eye gaze direction, then cameras will be used to detect the eye gaze direction. When the primary type of input is a voice command, a microphone will be used to detect the voice command.

At step 140, an input of a different secondary type performed by the user is detected. Conversely to step 130, when it is determined that the user is not able (or it would be distracting, disrupting, or otherwise inappropriate) to provide an input of the primary type, an input of the secondary type (different to the primary type) of input is detected. This input can then be used to control the interface, rather than the input of the primary type.

In some cases the primary input type may comprise at least one of a hand gesture, an eye gaze direction, a voice command, and a controller interaction. Also, the secondary input type may comprise at least one of a foot gesture, a leg gesture, an arm gesture, and a head gesture.

Of course, various different combinations of the above exemplary primary and secondary types will be advantageous in different scenarios. In a surgical setting, where the user is a surgeon, the primary input type may be a hand gesture, but this may switch to a foot gesture when the surgeon begins to operate (i.e. hands-busy). In an aviation setting, a controller interaction may be the primary input type for a pilot, but this may switch to a secondary input type such as a head gesture or even a voice control when the pilot is positioned away from the controls.

Moreover, there may be multiple primary input types, and multiple secondary input types. In this case, the input control method may only switch to the secondary input type when each of the primary input types are unavailable for the user. Taking the surgical setting example again, the primary input types may be hand gesture, eye gaze direction and voice control. However, if the surgeon is currently operating, is looking at a patient, and there are many medical support personnel around, it may be determined to switch to a secondary input type, such as a foot gesture.

Both steps 130 and 140, may further comprise (optional) steps 132/144 and 134/146. In step 132/144 a signal containing the input of the primary type or the secondary type is obtained. The signal may comprise at least one of an image signal, a sound signal, a pressure signal, or a motion sensor signal. For example, if the input is a voice command, a sound signal may be obtained. If the input is a hand gesture, an image signal may be obtained. If the input is a controller input, a motion sensor signal may be obtained.

At step 134/146, the signal is analyzed in order to extract the input of the primary type or the secondary type. Thus, the interface may be controlled using the extracted input.

Finally, the method 100 may further comprise step 142. Step 142 may be conducted responsive to determining that the user is not able to provide the primary type of input. In this case, the user may be notified of a switch of input type. In other words, a notification is communicated to the user prompting a switch of input type. This may be in the form of an audio, visual or haptic signal, such that the user is aware of the switch.

In this case, the user may need to confirm the switch in order for the input of the secondary type to be obtained. Indeed, this may be to prevent accidental inputs being provided to the interface. Alternatively, the user may simply be notified, and an input of the secondary type obtained.

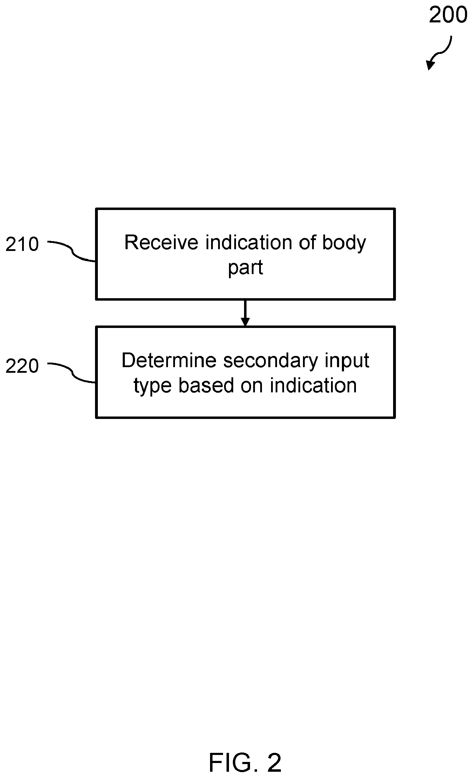

Fig. 2 presents a flow diagram of a method 200 for determining a secondary input type according to an aspect utilized by some embodiments of the invention. Indeed, in some embodiments the secondary input type may be selectable by the user. More specifically, the secondary type of input may be attributable to a body part, which the user may move to provide an input in case the input of the primary type is unavailable.

Specifically, at step 210, an indication of a body part of the user is obtained. This may be by the user inputting the body part via the user interface manually (i.e. via a drop-down list, or a text box). Alternatively, the user may tap, touch or otherwise tag a body part, and a camera may detect this. Then, at step 220, the secondary input type may be determined based on the indication from the user. For example, if the user taps, touches, or otherwise tags an area of their body near their foot, the secondary input type may be determined to be a foot gesture/movement.

Of course, alternative methods of selecting a secondary type of input, or indeed a body part as a secondary input means. Will be readily appreciated. This enables a degree of flexibility in the system, allowing the user to select a secondary input type that they anticipate may be the most appropriate should the primary input type be unavailable.

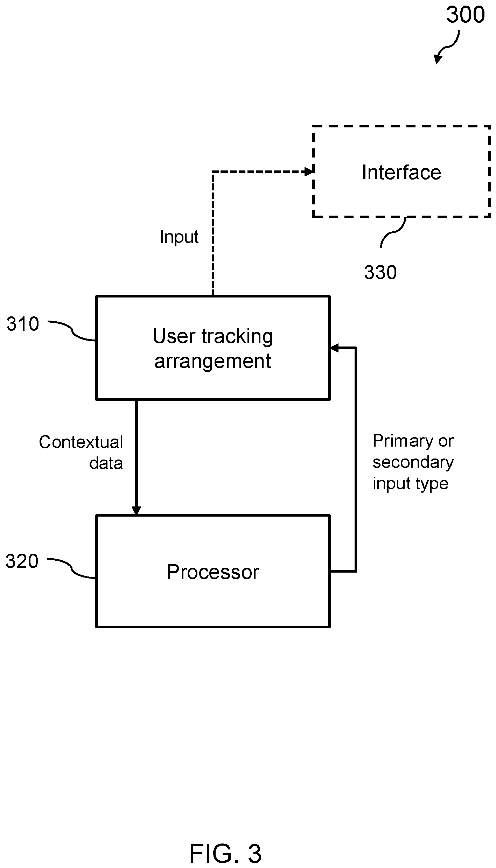

Fig. 3 presents a simplified block diagram of a system 300 for acquiring an input from a user to control an interface 330 according to another embodiment. The system comprises a user tracking arrangement 310, and a processor 320.

The user tracking arrangement 310 is configured to monitor the user to generate contextual data describing a context of the user. Thus, the user tracking arrangement may obtain contextual data, via cameras, microphones or other sensing devices in order to obtain contextual data as described above.

The processor 320 is configured to process the contextual data to determine whether the user is able to provide a primary type of input using a method as described above. The processor may be a part of the same device as the user tracking arrangement, or may be provided remotely.

Further, the user tracking arrangement 310 is configured to detect an input of the primary type performed by the user responsive to determining that the user is able to provide the primary type of input. The user tracking arrangement 310 also detects an input of the secondary type performed by the user responsive to determining that the user is not able to provide the primary type of input, wherein the secondary input type is different from the primary input type. This may be performed using the same sensors as were used to monitor the user to obtain the contextual information, or may be performed by separate devices.

Of course, the above system may be adapted to perform any aspects of the method described in reference to Fig. 1 (including or excluding the optional steps).

By way of an illustrative medical scenario, the system 300 may operate in the following way:
(i) A physician (i.e. the user) may enter a surgery room and may pick up a headset that will be worn during the procedure. The user interface and/or another application may ask them to select a body part that they will use as their fallback/secondary interaction leg to provide an input in case input of a primary type is unavailable.
(ii) The physician may look down and tap-and-hold their right leg, for example, to confirm that they wish that body part to be the secondary input type. This gesture is detected and is recorded as the secondary input type.
(iii) During the procedure, the physician wishes to control the interface in order to review x-ray images of a subject. The system may detect that they are using their hands to control a catheter (meaning that they are not capable of providing a hand gesture). The system may also detect that there are on-going discussions among other people in the vicinity of the physician, meaning that voice control of the interface may be difficult. Thus, as both of these primary input types are unavailable, the system begins tracking the physician's right foot to detect an input of the secondary type.
(iv) The headset may display a hologram to the user, the hologram containing an X-ray image.
(v) By gazing at the hologram, the application may understand that it is ready to be interacted with. The physician may now perform gestures with their right foot to invoke user interface controls. For example:
   (a) By pointing their foot to the right they are able to select a "next frame" button;
   (b) By tapping their foot down the `next frame' button action may be activated, resulting in the x-ray image control to move to the next frame; and
   (c) To go back a previous frame, the physician may now point their foot to the left.
   (d) Alternatively, the physician could perform the same action by keeping their toes on the ground, but using the heel of their foot to `point and click' .
   (e) Further, the physician could cancel the foot interaction mode (when selecting an action) by lifting their foot from the ground entirely. This could function as a cancel action.
   (f) Many further foot gestures would be readily envisioned by the skilled person.
In terms of implementation, in order to capture the foot gestures, a motion sensor may be attached to the foot to measure the orientation and movements the foot is making. A camera system tracking the foot is another option.

Finally, the system may also be able to define exclusion zones in the physical space of the user where the above-mentioned steps (a-f) would not work. Whenever the camera sees (or a motion sensor detects) that the user is about to step on e.g. a colleague's foot, footswitch, cable or other object the action may not be triggered. Additionally, a visual cue could be added to the hologram to indicate that the user might be stepping on something.

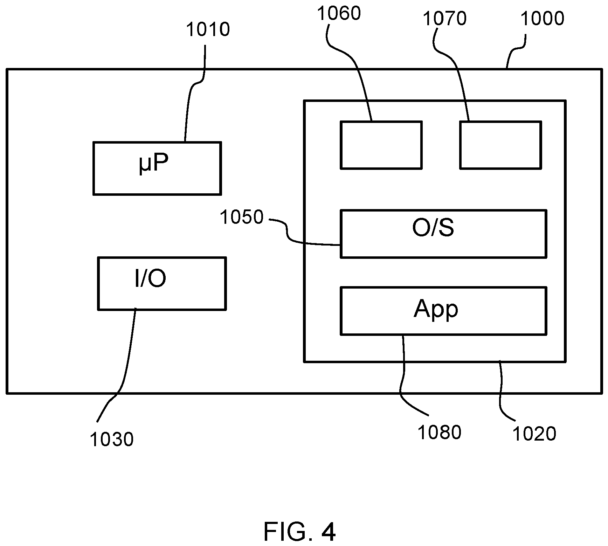

Moving on, Fig. 4 illustrates an example of a computer 1000 within which one or more parts of an embodiment may be employed. Various operations discussed above may utilize the capabilities of the computer 1000. For example, one or more parts of a system for acquiring an input from a user to control an interface may be incorporated in any element, module, application, and/or component discussed herein. In this regard, it is to be understood that system functional blocks can run on a single computer or may be distributed over several computers and locations (e.g. connected via internet).

The computer 1000 includes, but is not limited to, PCs, workstations, laptops, PDAs, palm devices, servers, storages, and the like. Generally, in terms of hardware architecture, the computer 1000 may include one or more processors 1010, memory 1020 and one or more I/O devices 1030 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1010 is a hardware device for executing software that can be stored in the memory 1020. The processor 1010 can be virtually any custom made or commercially available processor, a central processing unit (CPU), a digital signal processor (DSP), or an auxiliary processor among several processors associated with the computer 1000, and the processor 1010 may be a semiconductor-based microprocessor (in the form of a microchip) or a microprocessor.

The memory 1020 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in the memory 1020 may include one or more separate programs, each of which comprises an ordered listing of executable instructions for implementing logical functions. The software in the memory 1020 includes a suitable operating system (O/S) 1050, compiler 1060, source code 1070, and one or more applications 1080 in accordance with exemplary embodiments. As illustrated, the application 1080 comprises numerous functional components for implementing the features and operations of the exemplary embodiments. The application 1080 of the computer 1000 may represent various applications, computational units, logic, functional units, processes, operations, virtual entities, and/or modules in accordance with exemplary embodiments, but the application 1080 is not meant to be a limitation.

The operating system 1050 controls the execution of other computer programs, and provides scheduling, input-output control, file and data management, memory management, and communication control and related services. It is contemplated by the inventors that the application 1080 for implementing exemplary embodiments may be applicable on all commercially available operating systems.

Application 1080 may be a source program, executable program (object code), script, or any other entity comprising a set of instructions to be performed. When a source program, then the program is usually translated via a compiler (such as the compiler 1060), assembler, interpreter, or the like, which may or may not be included within the memory 1020, so as to operate properly in connection with the O/S 1050. Furthermore, the application 1080 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 1030 may include input devices such as, for example but not limited to, a mouse, keyboard, scanner, microphone, camera, etc. Furthermore, the I/O devices 1030 may also include output devices, for example but not limited to a printer, display, etc. Finally, the I/O devices 1030 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1030 also include components for communicating over various networks, such as the Internet or intranet.

If the computer 1000 is a PC, workstation, intelligent device or the like, the software in the memory 1020 may further include a basic input output system (BIOS) (omitted for simplicity). The BIOS is a set of essential software routines that initialize and test hardware at start-up, start the O/S 1050, and support the transfer of data among the hardware devices. The BIOS is stored in some type of read-only-memory, such as ROM, PROM, EPROM, EEPROM or the like, so that the BIOS can be executed when the computer 800 is activated.

When the computer 1000 is in operation, the processor 1010 is configured to execute software stored within the memory 1020, to communicate data to and from the memory 1020, and to generally control operations of the computer 1000 pursuant to the software. The application 1080 and the O/S 1050 are read, in whole or in part, by the processor 1010, perhaps buffered within the processor 1010, and then executed.

When the application 1080 is implemented in software it should be noted that the application 1080 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1080 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The method described in relation to Figs 1 and 2, and the system described in relation to Fig. 3, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagram Fig. 3 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figs illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figs. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method (100) for acquiring an input from a user to control an interface, the method comprising:
obtaining (110) contextual data describing a context of the user;
processing (120) the contextual data to determine whether the user is able to provide a primary type of input;
responsive to determining that the user is able to provide the primary type of input, detecting (130) an input of the primary type performed by the user; and
responsive to determining that the user is not able to provide the primary type of input, detecting (140) an input of a different secondary type performed by the user.

2. The method of claim 1, wherein the contextual data comprises information describing a property of the user or the environment surrounding the user.

3. The method of claim 2, wherein the contextual data comprises information describing at least one of a position of the user, a condition of the user, a task being performed by the user, a gaze direction of the user, an ambient noise surrounding the user, a location of the user, and other persons near the user.

4. The method of any of claims 1-3, wherein obtaining (110) the contextual data is performed responsive to the user providing at least one of the primary type of input and the secondary type of input.

5. The method of any of claims 1-4, wherein the primary input type comprises at least one of a hand gesture, an eye gaze direction, a voice command, and a controller interaction.

6. The method of any of claims 1-5, wherein the secondary input type comprises at least one of a foot gesture, a leg gesture, an arm gesture, and a head gesture.

7. The method of any of claims 1-6, wherein the secondary input type is user selectable.

8. The method of claim 7, further comprising:
receiving (210) an indication of a body part of the user; and
determining (220) the secondary input type based on the indication from the user.

9. The method of any of claims 1-8, wherein obtaining the contextual data comprises:
obtaining (112) one or more images including at least part of the user from one or more cameras of a user monitoring system; and
analyzing (114) the one or more images to extract the contextual data.

10. The method of any of claims 1-9, further comprising, responsive to determining that the user is not able to provide the primary type of input:
communicating a notification to the user prompting a switch of input type; and
receiving (142) a confirmation from the user.

11. The method of any of claims 1-10, wherein detecting the input of the primary type or the input of the secondary type, comprises:
obtaining (132, 144) a signal containing the input of the primary type or the secondary type, the signal comprising at least one of an image signal, a sound signal, a pressure signal, or a motion sensor signal; and
analyzing (134, 146) the signal to extract the input of the primary type or the secondary type.

12. The method of any of claims 1-11, further comprising determining whether the user is able to provide a plurality of primary types of input by processing the contextual data, and wherein detecting the input of the secondary type is performed responsive to determining that the user is not able to provide each of the plurality of primary types of input.

13. The method of any of claims 1-12, wherein the interface is augmented reality or virtual reality based.

14. A computer program comprising computer program code means adapted, when said computer program is run on a computer, to implement the method of any of claims 1-13.

15. A system (300) for acquiring an input from a user to control an interface (330), the system comprising:
a user tracking arrangement (310) configured to monitor the user to generate contextual data describing a context of the user;
a processor (320) configured to process the contextual data to determine whether the user is able to provide a primary type of input, and
wherein the user tracking arrangement is further configured to:
detect an input of the primary type performed by the user responsive to determining that the user is able to provide the primary type of input; and
detecting an input of the secondary type performed by the user responsive to determining that the user is not able to provide the primary type of input, wherein the secondary input type is different from the primary input type.
